# EUROPÄISCHE PATENTANMELDUNG

(11) **EP 1 964 824 A1**
(43) Veröffentlichungstag der Anmeldung: **03.09.2008**
(21) Anmeldenummer: 07102295.8
(22) Anmeldetag: 13.02.2007
(51) Int. Cl.: C04B 40/00, C04B 14/06, C04B 14/30, C04B 18/14, C04B 22/06, C04B 22/14, C04B 24/02, C04B 24/04, C04B 24/12, C04B 103/12, C04B 103/14, C04B 111/10, C04B 111/00

(54) **Erstarrungs- und Erhärtungsbeschleuniger für hydraulische Bindemittel sowie Verfahren zu dessen Herstellung**

(71) Anmelder: Sika Technology AG, 6340 Baar (CH)
(72) Erfinder: Schürch, Heinz, 5728 Gontenschwil (CH); Lindlar, Benedikt, 78467 Konstanz (DE); Wombacher, Franz, 8916 Jonen (CH); Lootens, Didier, 8006 Zürich (CH); Flatt, Robert, 8003 Zürich (CH)
(74) Vertreter: Sika Patent Attorneys

(57) **Zusammenfassung**

Die vorliegende Erfindung betrifft einen fluoridfreien Erstarrungs- und Erhärtungsbeschleuniger für hydraulische Bindemittel umfassend Sulfat, Aluminium und organische Säure, wobei das Molverhältnis von Aluminium zu Sulfat kleiner als 0.83 ist.

## Beschreibung

### Technisches Gebiet

Die Erfindung betrifft einen Erstarrungs- und Erhärtungsbeschleuniger für hydraulische Bindemittel, ein Verfahren zur Herstellung eines Erstarrungs- und Erhärtungsbeschleunigers für hydraulische Bindemittel und die Verwendung des Erstarrungs- und Erhärtungsbeschleunigers in einem Spritzbeton oder Spritzmörtel.

### Stand der Technik

Es sind viele Substanzen bekannt, welche das Erstarren und Erhärten von Beton beschleunigen. Gebräuchlich sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, wie Verätzungen, auftreten und sie reduzieren die Endfestigkeit und die Dauerhaftigkeit des Betons.

Aus der EP 0 076 927 B1 sind alkalifreie Erstarrungsbeschleuniger für hydraulische Bindemittel bekannt, welche diese Nachteile vermeiden sollen. Zur Beschleunigung des Erstarrens und Erhärtens eines hydraulischen Bindemittels, wie Zement, Kalk, hydraulischer Kalk und Gips sowie daraus hergestelltem Mörtel und Beton, werden dem Gemisch, welches das genannte Bindemittel enthält, von 0.5 bis 10 Gew.%, bezogen auf das Gewicht dieses Bindemittels, eines alkalifreien Erstarrungs- und Erhärtungsbeschleunigers zugegeben, wobei dieser Beschleuniger Aluminiumhydroxid enthält.

Solche Mörtel und Betone sind durch das beschleunigte Erstarren und Erhärten besonders gut geeignet als Spritzmörtel und -beton.

Aus der EP 0 946 451 B1 sind Erstarrungs- und Erhärtungsbeschleuniger in gelöster Form für hydraulische Bindemittel bekannt, welche beim Spritzen des Betons leichter dem Beton zugemischt werden können. Ein solcher Erstarrungs- und Erhärtungsbeschleuniger besteht unter anderem aus Aluminiumhydroxid, Aluminiumsalzen und organischen Carbonsäuren.

Aus WO 03/106375 A1 sind Erstarrungs- und Erhärtungsbeschleuniger bekannt, welche mindestens Aluminiumsulfat, Alkanolamin und Flusssäure enthalten.

WO 2005/075381 A1 beschreibt einen Erstarrungs- und Erhärtungsbeschleuniger umfassend Aluminiumhydroxid, Aluminiumsulfat und organische Säure, wobei der Beschleuniger ein Molverhältnis von Aluminium zur organischen Säure von kleiner als 0.65 aufweist.

Solche bekannten Beschleuniger benötigen zur Herstellung relativ viel amorphes Aluminiumhydroxid, welches sehr teuer ist. Zudem wird in solchen Beschleunigern eine relativ hohe Menge an organischen Carbonsäuren benötigt, um den Beschleuniger genügend zu stabilisieren. Ausserdem kann die Verwendung von fluoridhaltigen Verbindungen, wie beispielsweise Flusssäure, schädlich sein für die Gesundheit und Umwelt und ist daher unerwünscht. Weitere Nachteile solcher Erstarrungs- und Erhärtungsbeschleuniger sind zudem eine relativ geringe Frühfestigkeit in den ersten Stunden und Tagen und die ungenügende Stabilität der Lösung.

### Darstellung der Erfindung

Der Erfindung liegt die Aufgabe zugrunde, bei einem Erstarrungs- und Erhärtungsbeschleuniger für hydraulische Bindemittel der eingangs genannten Art einen möglichst günstigen Beschleuniger mit möglichst hoher Festigkeit bei möglichst langer Stabilitätsdauer des Beschleunigers zu erzielen.

Erfindungsgemäss wird dies durch die Merkmale des ersten Anspruches erreicht.

Die Vorteile der Erfindung sind unter anderem darin zu sehen, dass durch die erfindungsgemässen Beschleuniger eine hohe Stabilität, d.h. Stabilisierung der Beschleuniger-Lösung erzielt wird und dass hohe Festigkeiten in den ersten Stunden und Tagen erzielt werden. Zudem ist der erfindungsgemässe Beschleuniger günstiger als herkömmliche Beschleuniger.

Weitere vorteilhafte Ausgestaltungen der Erfindung ergeben sich aus der Beschreibung und den Unteransprüchen.

### Weg zur Ausführung der Erfindung

Erfindungsgemässe Erstarrungs- und Erhärtungsbeschleuniger für hydraulische Bindemittel sind fluoridfrei und umfassen Sulfat, Aluminium und und 1 bis 18 Gew.-% organische Säure, bezogen auf das Gesamtgewicht des Beschleunigers, wobei das Molverhältnis von Aluminium zu Sulfat kleiner als 0.83 ist. Solche Beschleuniger sind auf verschiedenen Wegen herstellbar. Der Beschleuniger ist vorzugsweise ein wasserbasierender Beschleuniger, der als Lösung, mit teilweise fein dispergierten Partikeln oder als Dispersion auftreten kann.

Der erfindungsgemässe Beschleuniger ist alkali- und chloridfrei. Unter einem alkali- und chloridfreien Beschleuniger wird in der Bauchemie üblicherweise ein Beschleuniger verstanden, welcher weniger als 1 Gew.-% Alkali-, bzw. Alkalimetall- oder Chloridionen aufweist, bezogen auf das Gewicht des Beschleunigers. Zudem enthält ein bevorzugter erfindungsgemässer Beschleuniger vorzugsweise keine Mineralsäure.

Ein solcher erfindungsgemässer fluoridfreier Erstarrungs- und Erhärtungsbeschleuniger umfasst vorteilhafterweise:
- 17 bis 35 Gew.-% Sulfat,
- 3.2 bis 9.5 % Gew.-% Aluminium (bzw. 6 bis 18 % Al₂O₃)
- 1 bis 18 Gew.-% organische Säure,
- 0 bis 6 Gew.-% Magnesium,
- 0 bis 10 Gew.-% Alkanolamin,
- 0 bis 5 Gew.-% eines weiteren zwei- oder höherwertigen Metallsulfates,
- 0 bis 5 Gew.-% Fliessmittel,
- 0 bis 35 Gew.-% Siliciumdioxid,
- 0 bis 8 Gew.-% Glycerin,
- sowie Wasser, wobei das Molverhältnis von Aluminium zu Sulfat kleiner als 0.83 ist.

Die vorgenannten Stoffe sind dabei vorteilhafterweise als Ionen in Lösung anzutreffen, können jedoch auch in komplexierter Form oder ungelöst im Beschleuniger auftreten. Dies ist insbesondere der Fall, wenn der Beschleuniger als Lösung mit teilweise fein dispergierten Partikeln oder als Dispersion auftritt.

In einer bevorzugten Ausführungsform umfasst der erfindungsgemässe Beschleuniger 17 bis 35 Gew.-% Sulfat, 3.2 bis 9.5 Gew.-% Aluminium und 2 bis 16 Gew.-% organischer Säure. Noch mehr bevorzug ist ein Beschleuniger umfassend 24 bis 29 Gew.-%, vorzugsweise 24.5 bis 27 Gew.-%, noch mehr bevorzugt 24.95 bis 27 Gew.-% Sulfat, 4 bis 6.5 Gew.-% Aluminium und 2 bis 10 Gew.-%, vorzugsweise 2 bis 8 Gew.-% organischer Säure, bezogen auf das Gesamtgewicht des Beschleunigers.

Ein besonders geeigneter Beschleuniger umfasst zusätzlich Magnesium, vorzugsweise in einer Menge von 0.01 bis 6 Gew.-%, insbesondere 0.4 bis 3.1 Gew.-%, bezogen auf das Gesamtgewicht des Beschleunigers.

Weiterhin umfasst der erfindungsgemässe Beschleuniger vorzugsweise zusätzlich Glycerin, vorzugsweise in einer Menge von 0.1 bis 8 Gew.-%, insbesondere 2 bis 4 Gew.-%, bezogen auf das Gesamtgewicht des Beschleunigers.

Ein erfindungsgemässer fluoridfreier Erstarrungs- und Erhärtungsbeschleuniger für hydraulische Bindemittel ist zum Beispiel herstellbar aus mindestens 40 bis 60 Gew.-% Aluminiumsulfat (Al₂(SO₄)₃-14H₂O) und 1 bis 18 Gew.-% organischer Säure, bezogen auf das Gesamtgewicht des Beschleunigers, wobei das Molverhältnis von Aluminium zu Sulfat kleiner als 0.83 ist.

Das zur Herstellung verwendete Aluminiumsulfat kann eine unterschiedliche Menge an Kristallwasser enthalten. Das typischerweise verwendete Aluminiumsulfat ist das Aluminiumsulfat-Tetradecahydrat (Al₂(SO₄)₃*14H₂O). Es wird üblicherweise auch als 17% Aluminiumsulfat bezeichnet, weil es 17% Al₂O₃ enthält. Die in dieser vorliegenden Schrift erwähnten Mengenangaben betreffend Aluminiumsulfat beziehen sich auf das Al₂(SO₄)₃*14H₂O. Falls das Aluminiumsulfat andere Mengen an Kristallwasser enthält, sind die für die vorliegende Erfindung benötigten Mengen an Aluminiumsulfat einfach zu berechnen. So würde 40 bis 60 Gew.-% Al₂(SO₄)₃*14H₂O einer Menge eines kristallwasserfreien Al₂(SO₄)₃ von 23 bis 35 Gew.-% entsprechen.

Das Aluminiumsulfat kann auch durch eine Reaktion von Aluminiumhydroxid mit Schwefelsäure bei der Herstellung des Beschleunigers erzeugt werden, wobei sich entsprechend Sulfationen in der wässrigen Lösung bilden. Allgemein kann Aluminiumsulfat durch eine Reaktion einer basischen Aluminiumverbindung mit Schwefelsäure erzeugt werden.

In einer bevorzugten Ausführungsform wird bei der Herstellung des erfindungsgemässen Beschleunigers mindestens 45 bis 55 Gew.-% Aluminiumsulfat (Al₂(SO₄)₃*14H₂O) verwendet. Noch mehr bevorzugt ist eine Menge von über 50 Gew.-%. Besonders gute Resultate werden mit 51 bis 55 Gew.-%, insbesondere mit 51 bis 53 Gew.-% Aluminiumsulfat (Al₂(SO₄)₃*14H₂O), jeweils bezogen auf das Gesamtgewicht des Beschleunigers, erzielt.

Das Molverhältnis von Aluminium zu Sulfat muß in jedem Fall kleiner als 0.83 sein. Vorzugsweise ist das Molverhältnis von Aluminium zu Sulfat kleiner als 0.80, besonders bevorzugt kleiner als 0.7.

Das Molverhältnis von Aluminium zur organischen Säure ist bevorzugt größer als 0.67. Insbesondere bevorzugt ist ein Molverhältnis von Aluminium zur organischen Säure von mehr als 1.

Als organische Säure wird vorzugsweise eine Carbonsäure, besonders bevorzugt eine Monocarbonsäure verwendet. Besonders bevorzugt ist die Ameisensäure, es können jedoch auch andere gleichwirkende organischen Säuren wie z.B. Essigsäure verwendet werden. Vorzugsweise wird die Säure in einer Menge von 1 bis 16 Gew.-%, bevorzugt von 1 bis 10 Gew.-%, noch mehr bevorzugt von 2 bis 7 Gew.%, bezogen auf das Gesamtgewicht des Beschleunigers, verwendet.

Der erfindungsgemässe Beschleuniger kann besonders günstig hergestellt werden, da er in einer besonders bevorzugten Ausführungsform ohne das teure Aluminiumhydroxid Al(OH)₃ hergestellt werden kann und somit frei von Aluminiumhydroxid ist.

Vorzugsweise wird bei der Herstellung Aluminiumhydroxid in einer Menge von weniger als 5 Gew.-%, insbesondere 0.1 bis 3 Gew.%, bezogen auf das Gesamtgewicht des Beschleunigers, verwendet. Das Aluminiumhydroxid kann in amorpher oder kristalliner Form eingesetzt werden. Vorteilhafterweise wird amorphes Aluminiumhydroxid verwendet. Das Alumiumhydroxid kann auch in der Form von Aluminiumhydroxidcarbonat, Aluminiumhydroxysulfat oder ähnlichem verwendet werden.

Um Beschleuniger mit einer erhöhten Lagerstabilität zu erhalten, wird zur Herstellung vorzugsweise zusätzlich Magnesiumhydroxid Mg(OH)₂, vorzugsweise in einer Menge von 0.1 bis 10 Gew.-%, insbesondere 1 bis 5 Gew.-%, bezogen auf das Gesamtgewicht des Beschleunigers, verwendet. Anstelle des Magnesiumhydroxids kann auch die entsprechende Menge einer anderen Magnesiumverbindung, insbesondere eines Magnesiumsalzes oder Oxids, beispielsweise Magnesiumoxid MgO, Magnesiumoxyhydroxid, oder Magnesiumcarbonat, verwendet werden.

Der erfindungsgemässe Beschleuniger kann bei der Herstellung zusätzlich Alkanolamin, vorzugsweise in einer Menge von 0.1 - 10 Gew.-%, bezogen auf das Gesamtgewicht des Beschleunigers, enthalten. Als Alkanolamin wird vorteilhafterweise Diethanolamin DEA verwendet.

Zusätzlich kann zur Herstellung des erfindungsgemässen Beschleunigers mindestens ein weiteres zwei- oder höherwertiges Metallsulfat verwendet werden, vorzugsweise in einer Menge von 0.1- 5 Gew.-%, bezogen auf das Gesamtgewicht des Beschleunigers. Besonders bevorzugt als weiteres Metallsulfat ist das Mangan(11)sulfat. Ebenfalls geeignet ist das Eisensulfat.

Besonders stabile Beschleuniger und besonders gute Resultate werden mit einem erfindungsgemässen Beschleuniger erhalten, welcher zusätzlich Kieselsäure umfasst.

Unter dem Begriff "Kieselsäure" wird in der ganzen vorliegenden Schrift eine Kieselsäure verstanden, zu der neben der ortho-Kieselsäure alle Formen des Siliciumdioxids, also das Anhydrid der ortho-Kieselsäure, das eigentliche Siliciumdioxid, wie auch kolloidale, gefällte oder pyrogene Kieselsäure oder Silicafume, gezählt werden. Die im erfindungsgemässen Beschleuniger verwendete Kieselsäure ist oder enthält daher vorzugsweise kolloidale, gefällte, pyrogene Kieselsäure oder Mikrokieselsäure (Silicafume) oder ein Gemisch davon. Beispiele besonders geeigneter Kieselsäuren sind kolloidale Kieselsäure, Silicafume, Aerosil® oder Sipernat®. Die für die vorliegende Erfindung besonders geeignete Kieselsäure weist kompakte oder poröse Partikel auf, typischerweise mit einer spezifische Oberfläche von 50-1000 m²/g, insbesondere von 80 bis 500 m²/g und einer Partikelgrösse im Bereich von 4 bis 1000 nm, insbesondere von 7 bis 500 nm. Besonders bevorzugt sind kolloidale Kieselsäurepartikel, sogenannte Nanopartikel. Die im erfindungsgemässen Beschleuniger verwendeten Kieselsäurepartikel können eine unterschiedliche Grössenverteilung aufweisen. Es können also beispielsweise kleine und grosse Kieselsäurepartikel gemeinsam im Beschleuniger vorliegen. Die für die vorliegende Erfindung geeigneten Kieselsäurepartikel können auch Abfallprodukte sein, welche beispielsweise durch chemisch-mechanisches Polieren (CMP) von Siliciumdioxidprodukten erhalten werden. Die Oberfläche der Kieselsäurepartikel kann auch chemisch modifiziert sein.

Der Gehalt an Siliciumdioxid, beziehungsweise der Feststoffgehalt der Kieselsäure, bezogen auf das Gesamtgewicht des Beschleunigers, beträgt vorzugsweise 0.1 bis 40 Gew.-%, bevorzugt 1 bis 30 Gew.-%, noch mehr bevorzugt 3 bis 20 Gew.-%, insbesondere 6 bis 15 Gew.-%.

Vorzugsweise liegt die Kieselsäure als Kieselsäuredispersion vor und enthält Kieselsäurepartikel. Als flüssiges Medium wird insbesondere Wasser verwendet. Besonders bevorzugt als Kieselsäuredispersion ist Silicasol. Das Silicasol enthält vorzugsweise kolloidale Kieselsäure, insbesondere amorphe kolloidale Kieselsäure, mit einer Partikelgrösse im Bereich von 4 bis 1000 nm, insbesondere von 7 bis 500 nm. Typischerweise hat das Silicasol eine spezifische Oberfläche von 50-700 m²/g, insbesondere von 80 bis 500 m²/g. Als Kieselsäuredispersion ebenfalls besonders geeignet ist eine Dispersion mit Silicafume.

Der erfindungsgemässe Beschleuniger umfasst vorzugsweise ein Silicasol mit einem Gehalt an Siliciumdioxid, bezogen auf das Gesamtgewicht des Silicasols, von 1 bis 60 Gew.-%, insbesondere 5 bis 50 Gew.-%, noch mehr bevorzugt 10 bis 40 Gew.-%.

Vorzugsweise beträgt der Anteil der Kieselsäuredispersion, insbesondere an Silicasol, im Beschleuniger 0.1 bis 60 Gew.-%, insbesondere 5 bis 55 Gew.-%, bezogen auf das Gesamtgewicht des Beschleunigers. Besonders bevorzugt sind Beschleuniger, welche einen Anteil an Silicasol, bzw. an Silicafume-Dispersion von mehr als 20 Gew.-% aufweisen, insbesondere mit einem Anteil von 23 bis 55 Gew.-%, noch mehr bevorzugt mit einem Anteil von 25 bis 40 Gew.-%.

Der erfindungsgemässe Beschleuniger kann zusätzlich Fliessmittel, insbesondere Polycarboxylate, oder Stabilisatoren umfassen.

Selbstverständlich kann der erfindungsgemässe Beschleuniger weitere geeignete, dem Fachmann bekannte, Zusatzmittel umfassen. Vorzugsweise enthält er aber keine weiteren Verdickungsmittel oder Thixotropiermittel.

Ein bevorzugter erfindungsgemässer fluoridfreier Erstarrungs- und Erhärtungsbeschleuniger ist herstellbar aus (in Gew.-%, jeweils bezogen auf das Gesamtgewicht des Beschleunigers):
- 40 - 60 Gew.-% Aluminiumsulfat (Al₂(SO₄)₃*14H₂O)
- 1 - 16 Gew.-% organische Säure,
- 0 bis weniger als 5 Gew.-% Aluminiumhydroxid (Al(OH)₃),
- 0.1 - 10 Gew.-% Magnesiumhydroxid,
- 0 - 10 Gew.-% Alkanolamin,
- 0 -5 Gew.-% eines weiteren zwei- oder höherwertigen Metallsulfates,
- 0 - 35 Gew.-% Siliciumdioxid,
- 0 - 8 Gew.-% Glycerin,
- 0 - 5 Gew.-% Fliessmittel,
- restliche Menge Wasser, wobei ein Molverhältnis von Aluminium zu Sulfat kleiner als 0.83 ist.

Zur Herstellung besonders vorteilhafter Erstarrungs- und Erhärtungsbeschleuniger werden im wesentlichen verwendet (in Gew.-%):
- 45 - 55 Gew.-% Aluminiumsulfat (Al₂(SO₄)₃*14H₂O), vorzugsweise 51 - 55 Gew.-%,
- 1 - 10 Gew.-% organische Säure, insbesondere 2-7 Gew.-%,
- 0 - 3 Gew.-% Aluminiumhydroxid (Al(OH)₃), insbesondere 0 - 2 Gew.-% oder 1 - 3 Gew.-%,
- 1 - 5 Gew.-% Magnesiumhydroxid,
- 1 - 3 Gew.-% Alkanolamin,
- 1 - 3 Gew.-% eines weiteren zwei- oder höherwertigen Metallsulfates, insbesondere Mangansulfat,
- 0 - 20 Gew.-% Siliciumdioxid,
- 2 - 4 Gew.-% Glycerin,
- 0 - 3 Gew.-% Fliessmittel,
- restliche Menge Wasser, wobei ein Molverhältnis von Aluminium zu Sulfat kleiner als 0.8, bevorzugt kleiner als 0.7.

Falls das Siliciumdioxid beispielsweise als Kieselsäuredispersion, insbesondere als Silicasol, vorliegt, kann das Wasser vollständig in der Kieselsäuredispersion vorgelegt werden und es muss bei der Herstellung des Beschleunigers kein zusätzliches Wasser verwendet werden.

Im Vergleich zu herkömmlichen Erstarrungsbeschleunigern ist die Menge des bei der Herstellung verwendeten Aluminiumsulfats erhöht und die Menge der verwendeten Säure und insbesondere des Aluminiumhydroxids reduziert. Es ist sogar möglich, einen Beschleuniger frei von Aluminiumhydroxid herzustellen, was zu einem besonders günstigen Beschleuniger führt. Besonders gute Resultate werden auch mit einem Beschleuniger, welche eine geringe Menge an Alumniniumhydroxid enthält, erhalten. Bevorzugt werden bei der Herstellung des Beschleunigers bis zu 10% Magnesiumhyxdroxid und / oder eine entsprechende Menge Magnesiumoxid verwendet. Die reine Mg-Menge bezogen auf die gesamte Beschleuniger-Menge beträgt dabei 0 bis 6 Gew.-%, bevorzugt 0.4 bis 4,2 Gew.-%, noch mehr bevorzugt 0,8 bis 2,9 Gew.-%, insbesondere 1,3 bis 2,1 Gew.-%.

Das Verhältnis von Aluminium zur Sulfat wird durch den erhöhten Sulfatgehalt und tieferen Aluminiumgehalt auf einen Wert kleiner 0.83, vorzugsweise kleiner 0.8, insbesondere kleiner 0.7 eingestellt.

Durch die um bis zu 25% verringerte Menge des bei der Herstellung eingesetzten Aluminiums wird die Sulfatbeständigkeit gefördert. Dies ist ein Vorteil gegenüber herkömmlichen Beschleunigern, bei denen die Sulfatbeständigkeit durch den Beschleuniger drastisch verschlechtert wird. Die Verringerung der Sulfatbeständigkeit durch Aluminium-Eintrag wird insbesondere dadurch hervorgerufen, dass die Aluminatphasen eine besondere Affinität für Sulfat aufweisen. Das zusätzliche Aluminium erhöht den Anteil der Aluminatphasen im Beton, welche dann bei äusserer Sulfateinwirkung auf den ausgehärteten Beton einen nicht unwesentlichen Kristallisationsdruck durch Ettringitbildung hervorrufen und so zu Schäden führen. Der Aluminium-Gehalt angegeben als Al₂O₃ wird deshalb vorzugsweise kleiner als 14%, besonders bevorzugt kleiner als 13% und insbesondere kleiner als 12% Al₂O₃ gewählt.

Wird bei der Herstellung des Beschleunigers Magnesiumhydroxid und / oder -oxid verwendet, steigt durch die starke Reaktion des Magnesiumhydroxids und / oder -oxids mit der organischen Säure die Temperatur der Mischung so stark, dass das Wasser für diese Ansätze nicht aufgeheizt werden muss. Die weiteren Komponenten werden dann dieser erhitzten Mischung zugegeben. Die Komponenten können aber auch in anderer beliebiger Reihenfolge zugegeben werden. Dies vereinfacht den Prozess und es wird weniger Energie benötigt. Ein zusätzlicher Vorteil der Verwendung von Magnesium ist die durch die Magnesiumionen bewirkte deutlich höhere Lagerstabilität der Beschleuniger. Bereits bei einem Gehalt von 1 Gew.-% an Magnesiumhydroxid bei der Herstellung wird eine gute Lagerstabilität erzielt. Bei höheren Gehalten beträgt die Lagerstabilität mindestens vier Monate. Zusätzlich wird die Stabilität der Beschleuniger durch die verringerte Aluminium-Menge positiv beeinflusst. Durch die reduzierte Aluminiummenge beziehungsweise das verringerte Verhältnis von Aluminium zu Sulfat wird auch die Sulfatbeständigkeit erhöht.

Auch die Entwicklung der Druckfestigkeit des Spritzbetons in den ersten Stunden und Tagen wird sehr positiv beeinflusst und ist besser als bei herkömmlich verwendeten Beschleunigern.

Die erfindungsgemässen Beschleuniger können beispielsweise als Lösung, Dispersion oder pulverförmig vorliegen, wobei es bevorzugt ist, dass ein als Pulver vorliegender Beschleuniger vor der Anwendung in Wasser gelöst oder dispergiert wird.

Weiterhin betrifft die vorliegende Erfindung ein Verfahren zur Beschleunigung des Erstarrens und Erhärtens von hydraulischen Bindemitteln sowie daraus hergestelltem Mörtel oder Beton, dadurch gekennzeichnet, dass dem Gemisch, welches hydraulische Bindemittel enthält, ein erfindungsgemässer fluoridfreier Erstarrungs- und Erhärtungsbeschleuniger in einer Menge von 0.1 bis 15 Gew.-%, insbesondere von 1 bis 10 Gew.-%, bezogen auf das Gewicht des hydraulischen Bindemittels, zugegeben wird.

Der erfindungsgemässe Beschleuniger kann zur Beschleunigung des Abbindens und Erhärtens von hydraulischen Bindemitteln, hydraulischen Bindemitteln in Abmischung mit latent hydraulischen Bindemitteln oder inerten Füllstoffen, Mörtel oder Beton verwendet werden. Eine bevorzugte Verwendung erfolgt im Spritzmörtel oder Spritzbeton nach dem Trocken- oder Nass-spritzverfahren, wobei der Beschleuniger dem trockenen oder mit Wasser angemachten Bindemittel, Mörtel oder Beton in der Förderleitung, der Vorbenetzungsdüse oder der Spritzdüse, direkt in die Mischung oder ins Anmachwasser zugegeben resp. zudosiert wird. Vorzugsweise wird ein Beschleuniger in Form einer Lösung oder Dispersion mit einem Flüssigdosiergerät zudosiert, ein pulverförmiger Beschleuniger mit einem Pulverdosiergerät.

Beispiele für Bindemittel, deren Erhärten und Abbinden durch den erfindungsgemässen Beschleuniger resp. das Verfahren beschleunigt werden können, sind Zement wie Mischzemente, Kalk, hydraulischer Kalk und Gips, je alleine oder in Abmischung mit latent hydraulischen Bindemitteln oder inerten Füllstoffen, und Beispiele für Mischungen, welche diese Bindemittel enthalten, sind Mörtel und Beton, insbesondere Spritzmörtel und Spritzbeton.

Ein weiterer Gegenstand der vorliegenden Erfindung ist zudem ein härtbares resp. gehärtetes Bindemittel enthaltendes Gemisch, das den erfindungsgemässen Beschleuniger enthält, insbesondere Spritzmörtel und Spritzbeton enthaltend den erfindungsgemässen Beschleuniger.

Durch die Verwendung der erfindungsgemässen Erstarrungs- und Erhärtungsbeschleuniger wird ein äusserst rasches Abbinden der entsprechenden Bindemittel oder der Mischungen, die derartige Bindemittel enthalten, bewirkt, und es werden hohe Anfangs- und Endfestigkeiten erreicht. Die Abbinde- und Erhärtungsbeschleuniger wirken weder auf den Verarbeiter noch auf die Umwelt ätzend oder toxisch.

### Ausführungsbeispiele

Es wurden mehrere Proben erfindungsgemässer Beschleuniger gemäss den in Tabelle 1 angegeben Werten hergestellt, wobei Aluminiumsulfat mit 17% Al₂O₃ und gegebenenfalls amorphes Aluminiumhydroxid verwendet wurde, und mit einem Vergleichsbeispiel ohne Säure (B1) bzw. eines herkömmlichen Beschleunigers (B2) verglichen. Als herkömmlicher Beschleuniger (B2) wurde Gecedral® F2000W (erhältlich bei BK Giulini GmbH) verwendet.

**Tabelle 1: Probenzusammensetzung in Gew.-%**

| Nr. | H₂O | Al(OH)₃ | Al₂(SO₄)₃ *14H₂O | HCOOH | MnSO₄*1H₂O | Glycerin | DEA | Fe₂(SO₄)₃* 9H₂O | Mg(OH)₂ |
|---|---|---|---|---|---|---|---|---|---|
| A1 | 36.79 | 2.5 | 51.7 | 4.85 | 0 | 2.16 | 2 | 0 | 0 |
| A2 | 33.19 | 2.5 | 51.7 | 4.85 | 0 | 2.16 | 2 | 0 | 3.6 |
| A3 | 35.35 | 2.5 | 51.7 | 4.85 | 0 | 0 | 2 | 0 | 3.6 |
| A4 | 37.64 | 0 | 51.5 | 4.25 | 1.7 | 2.16 | 2.75 | 0 | 0 |
| A5 | 33.44 | 0 | 51.5 | 4.25 | 1.7 | 2.16 | 2.75 | 0 | 4.2 |
| A6 | 35.6 | 0 | 51.5 | 4.25 | 1.7 | 0 | 2.75 | 0 | 4.2 |
| A7 | 34 | 2.25 | 50.5 | 5 | 0 | 2.5 | 2 | 1 | 2.75 |
| A8 | 32.75 | 0 | 51 | 6.25 | 0 | 2.5 | 3.5 | 1.25 | 2.75 |
| B1 | 41.64 | 2.5 | 51.7 | 0 | 0 | 2.16 | 2 | 0 | 0 |

Zur Herstellung der Beschleuniger A2, A3, A5 und A6 bis A8 wurde Wasser ungeheizt vorgelegt. Das Magnesiumhydroxid wurde darin aufgeschlämmt und Ameisensäure zugegeben, wodurch die Temperatur zunahm. Danach wurde das Aluminiumsulfat, falls vorhanden das Aluminiumhydroxid, und das Mangansulfat beziehungsweise das Eisensulfat, beigefügt und bei erhöhter Temperatur gelöst. Zum Schluss wurden, falls vorhanden, das Glycerin und das Diethanolamin DEA zugegeben. Das Ganze wurde dann solange gerührt, bis die Reaktion abgeklungen war und die Temperatur nach ungefähr einer Stunde auf ca. 40°C gesunken war. Es entsteht eine Lösung welche je nach Zusammensetzung auch fein dispergierte Partikel aufweisen kann.

Zur Herstellung des Beschleunigers A1 und A4 ohne Magnesiumhydroxid oder -oxid wurde Wasser vorgeheizt vorgelegt. Die Ameisensäure wurde dem Wasser zugegeben und danach gegebenenfalls das Aluminiumhydroxid zugegeben. Danach wurden das Alumiumsulfat, das Mangansulfat beziehungsweise das Eisensulfat, das Glycerin und das Diethanolamin zugegeben. Das Ganze wurde dann solange gerührt, bis die Reaktion abgeklungen war.

In der Tabelle 2 sind die Molverhältnisse von Aluminium zu Sulfat und von Aluminium zur organischen Säure, hier Ameisensäure, der gemessenen Proben dargestellt. Die Werte der Molverhältnisse von Aluminium zur organischen Säure liegen dabei über 0.67, die Werte der Molverhältnisse von Aluminium zu Sulfat unter 0.83. Weiter ist der Aluminium-Gehalt der verschiedenen Beispiele angegeben.

**Tabelle 2: Molverhältnisse**

| Beispiel | Al / Sulfat | Al / Säure | % Al | % Al₂O₃ |
|---|---|---|---|---|
| A1 | 0.75 | 2.14 | 5.30 | 10.02 |
| A2 | 0.75 | 2.14 | 5.30 | 10.02 |
| A3 | 0.75 | 2.14 | 5.30 | 10.02 |
| A4 | 0.66 | 2.14 | 4.64 | 8.76 |
| A5 | 0.66 | 2.14 | 4.64 | 8.76 |
| A6 | 0.66 | 2.14 | 4.64 | 8.76 |
| A7 | 0.74 | 2.01 | 5.13 | 9.69 |
| A8 | 0.66 | 1.44 | 4.59 | 8.67 |
| B1 | 0.75 | -- | 5.30 | 10.02 |
| B2 | 1.40 | 1.18 | 7.85 | 14.83 |

Hydraulischen Bindemitteln können 0.1 bis 15 Gew.-%, insbesondere 1 bis 10 Gew.-%, des erfindungsgemässen Beschleunigers zugegeben werden.

Zur Bestimmung der Wirksamkeit des erfindungsgemässen Beschleunigers nach den Beispielen A1 bis A8 sowie der Vergleichsbeispiele B1 und B2 wurde einer Mörtelmischung (Korngrösse 0-2.2 mm, w/z = 0,48 und 1,0% Sika® ViscoCrete® SC305 (erhältlich bei Sika Schweiz AG)) jeweils 6% des Beschleunigers bezogen auf den Gehalt des hydraulischen Bindemittels zugemischt. Als hydraulisches Bindemittel wurde Portlandzement verwendet. Die Prüfung erfolgte mittels eines Nadelpenetrometers (Mecmesin BFG500) und an Prismen (40 x 40 x 160mm). Es wurde die Druckfestigkeit der Prismen mittels einer hydraulischen Presse ermittelt (Tabelle 3).

Überraschenderweise hat es sich gezeigt, dass durch die hohen Anteile an Aluminiumsulfat und Magnesium, trotz des reduzierten Aluminiumhydroxidgehalts und dem reduzierten Säureanteil, die Festigkeiten nach einigen Stunden bis zu einigen Tagen besser sind als bei herkömmlich bekannten Beschleunigern, siehe Tabelle 3. Besonders bevorzugt sind Ausführungen welche eine geringe Menge an Aluminiumhydroxid enthalten. Insbesondere geeignet sind Beschleuniger mit Magnesiumhydroxid. Dadurch konnten Beschleuniger mit einer besonders guten Lagerstabilität erhalten werden, währen Beschleuniger ohne Ameisensäure und ohne Magnesiumhydroxid bereits nach wenigen Tagen ausfielen.

**Tabelle 3: Festigkeiten in MPa**

| Beispiel | A1 | A2 | A3 | A4 | A5 | A6 | A7 | A8 | B1 | B2 |
|---|---|---|---|---|---|---|---|---|---|---|
| Festigkeit nach 6 Stunden | 1.7 | 2.1 | 2.2 | 1.3 | 1.9 | 2 | 2.5 | 2.3 | 1.4 | 2.1 |
| Festigkeit nach einem Tag | 21.9 | 20.8 | 22.7 | 22.4 | 21.7 | 22.3 | 20.8 | 22.3 | 18.9 | 10.1 |
| Festigkeit nach sieben Tagen | 35.2 | 33.6 | 33.4 | 33.9 | 34.2 | 33.8 | 42 | 43.8 | 33.5 | 30.8 |

Selbstverständlich ist die Erfindung nicht auf das gezeigte und beschriebene Ausführungsbeispiel beschränkt.

## Patentansprüche

1. Fluoridfreier Erstarrungs- und Erhärtungsbeschleuniger für hydraulische Bindemittel,
umfassend Sulfat, Aluminium und 1 bis 18 Gew.-% organische Säure, bezogen auf das Gesamtgewicht des Beschleunigers, wobei das Molverhältnis von Aluminium zu Sulfat kleiner als 0.83 ist.

2. Beschleuniger nach Anspruch 1, **dadurch gekennzeichnet, dass** er 17 bis 35 Gew.-% Sulfat, 3.2 bis 9.5 Gew.-% Aluminium und 2 bis 16 Gew.-% organischer Säure umfasst, bezogen auf das Gesamtgewicht des Beschleunigers.

3. Beschleuniger nach Anspruch 2, **dadurch gekennzeichnet, dass** er 24 bis 29 Gew.-%, vorzugsweise 24.5 bis 27 Gew.-% Sulfat, 4 bis 6.5 Gew.-% Aluminium und 2 bis 10 Gew.-% organischer Säure umfasst, bezogen auf das Gesamtgewicht des Beschleunigers.

4. Beschleuniger nach einem der vorhergehenden Ansprüche, **dadurch gekennzeichnet, dass** er zusätzlich Magnesium umfasst.

5. Beschleuniger nach Anspruch 4, **dadurch gekennzeichnet, dass** er 0.01 bis 6 Gew.-%, insbesondere 0.4 bis 3.1 Gew.-% Magnesium, umfasst, bezogen auf das Gesamtgewicht des Beschleunigers.

6. Beschleuniger nach einem der vorhergehenden Ansprüche, **dadurch gekennzeichnet, dass** der Beschleuniger zusätzlich Glycerin umfasst.

7. Beschleuniger nach einem der vorhergehenden Ansprüche, **dadurch gekennzeichnet, dass** das Molverhältnis von Aluminium zur organischen Säure grösser als 0.67 ist.

8. Fluoridfreier Erstarrungs- und Erhärtungsbeschleuniger für hydraulische Bindemittel nach einem der vorhergehenden Ansprüche,
herstellbar aus mindestens 40 bis 60 Gew.-% Aluminiumsulfat (Al₂(SO₄)₃*14H₂O) und 1 bis 18 Gew.-% organischer Säure, bezogen auf das Gesamtgewicht des Beschleunigers, wobei das Molverhältnis von Aluminium zu Sulfat kleiner als 0.83 ist.

9. Beschleuniger nach Anspruch 8, **dadurch gekennzeichnet, dass** bei der Herstellung mindestens 45 bis 55 Gew.-% Aluminiumsulfat (Al₂(SO₄)₃*14H₂O) und 2 bis 16 Gew.-% organische Säure verwendet wird, jeweils bezogen auf das Gesamtgewicht des Beschleunigers.

10. Beschleuniger nach einem der Ansprüche 8 oder 9, **dadurch gekennzeichnet, dass** bei der Herstellung mindestens 51 bis 55 Gew.-% Aluminiumsulfat (Al₂(SO₄)₃*14H₂O) vorliegen, bezogen auf das Gesamtgewicht des Beschleunigers.

11. Beschleuniger nach einem der vorhergehenden Ansprüche, **dadurch gekennzeichnet, dass** bei der Herstellung zusätzlich 0.1 bis 10 Gew.-%, insbesondere 1 bis 5 Gew.-%, Magnesiumhydroxid oder die entsprechende Menge eines anderen Magnesiumsalzes, bezogen auf das Gesamtgewicht des Beschleunigers vorliegt.

12. Beschleuniger nach einem der vorhergehenden Ansprüche, **dadurch gekennzeichnet, dass** bei der Herstellung zusätzlich Aluminiumhydroxid in einer Menge von weniger als 5 Gew.-%, insbesondere 0.1 bis 3 Gew.-%, bezogen auf das Gesamtgewicht des Beschleunigers vorliegt, wobei als Aluminiumhydroxid insbesondere amorphes Aluminiumhydroxid verwendet wird.

13. Beschleuniger nach einem der vorhergehenden Ansprüche, **dadurch gekennzeichnet, dass** das Molverhältnis von Aluminium zu Sulfat kleiner als 0.80, insbesondere kleiner als 0.7 ist.

14. Beschleuniger nach einem der vorhergehenden Ansprüche, **dadurch gekennzeichnet, dass** bei der Herstellung 0.1 - 10 Gew.-% Alkanolamin vorliegt.

15. Beschleuniger nach einem der vorhergehenden Ansprüche, **dadurch gekennzeichnet, dass** bei der Herstellung 0.1 - 5 Gew.-% mindestens eines weiteren zwei- oder höherwertigen Metallsulfates vorliegt.

16. Beschleuniger nach Anspruch 15, **dadurch gekennzeichnet, dass** das mindestens eine Metallsulfat ein Mangan(II)sulfat ist.

17. Beschleuniger nach Anspruch 15 oder 16, **dadurch gekennzeichnet, dass** das Metallsulfat ein Eisensulfat ist.

18. Beschleuniger nach einem der vorhergehenden Ansprüche, **dadurch gekennzeichnet, dass** die organische Säure eine Monocarbonsäure ist.

19. Beschleuniger nach Anspruch 18, **dadurch gekennzeichnet, dass** die Monocarbonsäure eine Ameisensäure ist.

20. Beschleuniger nach einem der vorhergehenden Ansprüche, **dadurch gekennzeichnet, dass** der Beschleuniger Kieselsäure umfasst.

21. Beschleuniger nach Anspruch 20, **dadurch gekennzeichnet, dass** die Kieselsäure kolloidale, gefällte oder pyrogene Kieselsäure oder Silicafume oder ein Gemisch davon ist.

22. Beschleuniger nach Anspruch 21, **dadurch gekennzeichnet, dass** die Kieselsäure als Kieselsäuredispersion vorliegt.

23. Beschleuniger nach Anspruch 22, **dadurch gekennzeichnet, dass** die Kieselsäuredispersion Silicasol ist und das Silicasol kolloidale Kieselsäure mit einer Partikelgrösse im Bereich von 4 bis 1000 nm, insbesondere von 7 bis 500 nm, enthält.

24. Beschleuniger nach Anspruch 23, **dadurch gekennzeichnet, dass** das Silicasol einen Gehalt an Siliciumdioxid, bezogen auf das Gesamtgewicht des Silicasols, von 1 bis 60 Gew.-%, insbesondere 5 bis 50 Gew.-% aufweist.

25. Beschleuniger nach einem der Ansprüche 20 bis 24, **dadurch gekennzeichnet, dass** der Gehalt an Siliciumdioxid bezogen auf das Gesamtgewicht des Beschleunigers 0.1 bis 40 Gew.-%, insbesondere 3 bis 20 Gew.-% beträgt.

26. Beschleuniger nach einem der Ansprüche 22 bis 25, **dadurch gekennzeichnet, dass** der Anteil der Kieselsäuredispersion im Beschleuniger 0.1 bis 60 Gew.-% beträgt, bezogen auf das Gesamtgewicht des Beschleunigers.

27. Verfahren zur Beschleunigung des Erstarrens und Erhärtens von hydraulischen Bindemitteln sowie daraus hergestelltem Mörtel oder Beton, **dadurch gekennzeichnet,**
**dass** einem Gemisch, welches hydraulische Bindemittel enthält, ein fluoridfreier Erstarrungs- und Erhärtungsbeschleuniger nach den Ansprüchen 1 bis 26 in einer Menge von 0.1 bis 15 Gew.-% bezogen auf das Gewicht des hydraulischen Bindemittels zugegeben wird.

28. Verwendung des fluoridfreien Erstarrungs- und Erhärtungsbeschleunigers nach Anspruch 1 bis 26 als Beschleuniger in einem Spritzbeton oder Spritzmörtel.

29. Bindemittel enthaltendes Gemisch, **dadurch gekennzeichnet, dass** es den Beschleuniger nach einem der Ansprüche 1 bis 26 enthält.
